# EUROPÄISCHE PATENTANMELDUNG

(11) **EP 2 518 268 A1**
(43) Veröffentlichungstag der Anmeldung: **31.10.2012**
(21) Anmeldenummer: 11164263.3
(22) Anmeldetag: 29.04.2011
(51) Int. Cl.: F01D 5/02, F16F 15/32, C22C 27/04, C23C 14/06, C23C 4/06

(54) **Turbinenkomponente mit beschichtetem Wuchtelement zum Einsatz bei hohen Temperaturen**

(71) Anmelder: SIEMENS AKTIENGESELLSCHAFT, 80333 München (DE)
(72) Erfinder: Böhme, Christian, 46119, Oberhausen (DE); Gollerthan, Susanne, 44787, Bochum (DE); Kirchner, Holger, 47475, Kamp-Lintfort (DE); Schürhoff, Jörg, 45479, Mülheim a.d. Ruhr (DE)

(57) **Zusammenfassung**

Die Erfindung betrifft eine Turbinenwelle (1) für eine Dampfturbine und ein dazugehöriges Herstellungsverfahren, wobei die Turbinenwelle (1) Wuchtelemente (4) aufweist zum Verhindern von Schwingungen, wobei die Wuchtelemente (4) mit geeigneten Materialien beschichtet werden, um dadurch eine Oxidation des Wuchtelements (4) zu vermeiden.

## Beschreibung

Die Erfindung betrifft eine Komponente zum Einsatz in einer Strömungsmaschine, wobei die Komponente eine Komponenten-Oberfläche aufweist und ein Wuchtelement umfasst.

Des Weiteren betrifft die Erfindung ein Verfahren zur Herstellung einer Komponente, wobei in die Komponenten-Oberfläche ein Wuchtelement angeordnet wird.

Unter einer Komponente ist beispielsweise eine Turbinenwelle für eine Strömungsmaschine wie z. B. eine Dampf- oder Gasturbine zu verstehen. Die Turbinenwelle einer Dampfturbine wird mit vergleichsweise hohen Frequenzen betrieben. In der kommunalen Energieversorgung rotiert die Turbinenwelle einer Dampfturbine mit 3000 min⁻¹ bzw. mit 3600 min⁻¹. Solch hohe Drehfrequenzen erzeugen vergleichsweise hohe zentrifugale Kräfte. Eine ungleichmäßige Massenverteilung der Turbinenwelle könnte problematisch sein, da dies zu Unwuchten und zu unerwünschten Schwingungen führen könnte.

Daher werden Turbinenwellen mit sogenannten Wuchtelementen ausgebildet, wobei die Wuchtelemente auf der Oberfläche der Turbinenwelle angeordnet werden und kraftschlüssig und/oder formschlüssig mit der Turbinenwelle verbunden sind. Dies könnte beispielsweise durch entsprechende Nuten in der Turbinenwellenoberfläche erfolgen, in die die Wuchtelemente eingearbeitet werden können. Als geeignetes Material für die Wuchtelemente haben sich hochwolframhaltige Legierungen bewährt, die eine hohe Dichte aufweisen, die zwischen 15 und 20 g/cm³ liegt. Der Wolframgehalt solch gut geeigneter Materialien liegt zwischen 85 Gew.-% und 99 Gew.-%. Aufgrund dieser hohen Masse können vergleichsweise kleine Wuchtelemente verwendet werden. Ein weiterer Vorteil solch hochwolframhaltiger Legierungen ist, dass diese einen hohen E-Modul sowie einen hohen G-Modul aufweisen. Aus hochwolframhaltigen Legierungen bestehende Wuchtelemente werden bzw. wurden bereits erfolgreich in Dampfturbinenwellen eingesetzt.

Problematisch ist hierbei, dass ab einer Temperatur von ca. 400°C Wolfram mit Sauerstoff zu Wolframoxid WO₃ oxidiert. Ab einer Temperatur von 500°C erfolgt die Oxidation sogar mit einer vergleichsweise hohen Oxidationsrate. Diese Oxidation führt zwangsläufig zu einer Gewichtszunahme der Wuchtelemente durch Aufwachsen von Oxid, was dazu führt, dass die Rotationseigenschaften der Turbinenwelle verändert werden. Die mögliche Folge ist, dass Schwingungen auftreten. Allerdings kommt es ebenfalls durchaus vor, dass die durch Oxidation entstandene Oxidschicht während des Betriebs abplatzt und dadurch ein Massenverlust der Wuchtelemente erfolgt. Dieser Massenverlust führt auch zu einer Veränderung der Massenverteilung der Turbinenwelle. Die Folge wäre ebenfalls eine Entstehung von Unwuchten und dadurch kann es sein, dass Schwingungen auftreten.

Bei sehr hohen Temperaturen von ca. 800°C könnte Wolframoxid sublimieren. Die zeitliche Konstanz der Masse der Wuchtelemente ist eine notwendige Eigenschaft, deren Änderung nicht toleriert werden kann. Eine Änderung der Masse der Wuchtelemente führt zwangsläufig zu Unwuchten und erhöht dadurch das Risiko von Schwingungen der Turbinenwelle. Dauerhaft erhöhte Schwingungen können zu einer Verringerung der Lebensdauer von Turbinenkomponenten führen.

Statt hochwolframhaltigen Legierungen könnten eventuell Materialien wie Stähle oder Nickelbasis-Legierungen verwendet werden, da diese eine vergleichsweise hohe Oxidationsbeständigkeit bei den eingesetzten Temperaturen aufweisen. Allerdings ist die Dichte der vorgenannten Materialien geringer als die Dichte der hochwolframhaltigen Legierungen. Daher müssten vergleichsweise große Volumina verwendet werden, was nachteilig ist, da diese großen Volumina in die Turbinenwelle eingearbeitet werden müssen.

An dieser Stelle setzt die Erfindung an, deren Aufgabe es ist, eine Komponente und ein Verfahren anzugeben, das eine verbesserte Wuchteigenschaft aufweist.

Gelöst wird diese Aufgabe durch eine Komponente zum Einsatz in einer Strömungsmaschine, wobei die Komponente eine Komponenten-Oberfläche aufweist, wobei die Komponente ein Wuchtelement umfasst, wobei eine Schutzschicht auf dem Wuchtelement angeordnet ist.

Die auf das Verfahren hin gerichtete Aufgabe wird gelöst durch ein Verfahren zur Herstellung einer Komponente, wobei in die Komponenten-Oberfläche ein Wuchtelement angeordnet wird, wobei das Wuchtelement beschichtet wird.

Vorteilhafte Weiterbildungen sind in den Unteransprüchen angegeben.

Die Erfindung geht von dem Gedanken aus, dass ein Wuchtelement in bekannter Weise mit der Komponente verbunden werden kann und eine Oxidationsbeständigkeit durch eine Beschichtung erhöht wird. Durch die Beschichtung wird wirksam behindert, dass Sauerstoffmoleküle in Berührung mit dem Wuchtelement kommen, wodurch eine Oxidation reduziert wird. Dadurch, dass eine Oxidation reduziert wird, ist auch das oben genannte Problem der Gewichtszunahme und der durch Abplatzung erfolgten Gewichtsabnahme wirksam reduziert.

Vorteilhafterweise wird das Wuchtelement auf der Komponenten-Oberfläche angeordnet.

Dazu weist vorteilhafterweise die Komponente eine Aussparung auf, in der das Wuchtelement angeordnet ist. Somit wird die mechanische Stabilität des Wuchtelements mit der Komponente als Gesamtsystem erhöht.

In einer weiteren vorteilhaften Weiterbildung ist die Komponente als Welle ausgebildet. Gerade bei Wellen, die mit einer hohen Rotationsfrequenz bewegt werden, ist es wichtig, dass Wuchtelemente keine Gewichtszunahme oder Gewichtsabnahme während des Betriebs zeigen.

In einer weiteren vorteilhaften Weiterbildung ist die Komponente aus martensitischen Stählen, austenitischen Stählen, ferritschen Stählen oder Nickelbasis-Legierungen.

In einer weiteren vorteilhaften Weiterbildung besteht das Wuchtelement aus einer hochwolframhaltigen Legierung, wobei de Wolframgehalt zwischen 85 Gew.-% bis 99 Gew.-% liegt.

In einer vorteilhaften Weiterbildung ist die Schutzschicht aus folgenden Materialien ausgebildet:
- Nickel oder
- Nickel-Chrom mit mindestens 15 Gew.-% Chrom oder
- Korund (Al₂O₃) oder
- Aluminiumnitrid (AlN) oder
- Chromnitrid (CrN) oder
- Chromaluminiumnitrid (CrAlN)oder
- Titannitrid (TiN) oder
- Titanaluminiumnitrid (TiAlN) oder
- Chrom oder
- Chrom-Gold oder
- Nickelbasis-Legierungen.

Vorteilhafterweise wird die Schutzschicht mittels einer galvanischen Beschichtung erzeugt, wobei folgende Materialien verwendet werden:
- Nickel,
- Nickel-Chrom oder
- Nickel und Chrom, wobei die beiden vorgenannten Materialien als Mehrlagen-System mit einer anschließenden Diffusionsglühung ausgebildet sind.

In einer weiteren vorteilhaften Weiterbildung wird die Beschichtung mittels eines PVD-Verfahrens (Physical Vapor Deposition, Physikalische Gasphasenabscheidung) aufgebracht, wobei die folgenden Materialien verwendet werden:
- Korund (Al₂O₃),
- Aluminiumnitrid (AlN),
- Chromnitrid (CrN),
- Chromaluminiumnitrid (CrAlN),
- Titannitrid (TiN),
- Titanaluminiumnitrid (TiAlN),
- Chrom oder
- Chrom-Gold.

In einer weiteren vorteilhaften Weiterbildung erfolgt die Beschichtung des Wuchtelements durch eine Einbettung des Wuchtelements und einem Umgießen des Wuchtelements. Als Material wird beispielsweise eine Nickelbasis-Legierung verwendet.

Durch die erfindungsgemäße Beschichtung des Wuchtelements wird dessen Lebensdauer deutlich erhöht. Sofern Ausgleichsnuten in der Komponente verwendet werden, können diese kleiner ausgeführt werden als bei einem Einsatz anderer Materialien mit geringerer Dichte wie z. B. Stahl. Dadurch, dass die Oxidation durch die Schutzschicht nunmehr wirksam reduziert ist, können die Wuchtelemente auch in Temperaturbereichen eingesetzt werden, wo ohne Beschichtung signifikante Oxidation auftreten kann.

Die Erfindung wird anhand eines Ausführungsbeispiels näher erläutert. Bauteile mit gleichen Bezugszeichen weisen im Wesentlichen die gleiche Wirkungsweise auf.

Es zeigen:
- Figur 1: eine perspektivische Ansicht einer Komponente,
- Figur 2: eine Querschnittsansicht der Komponente,
- Figur 3: eine Querschnittsansicht einer alternativen Komponente,
- Figur 4: eine perspektivische Ansicht eines Teils der alternativen Komponente.

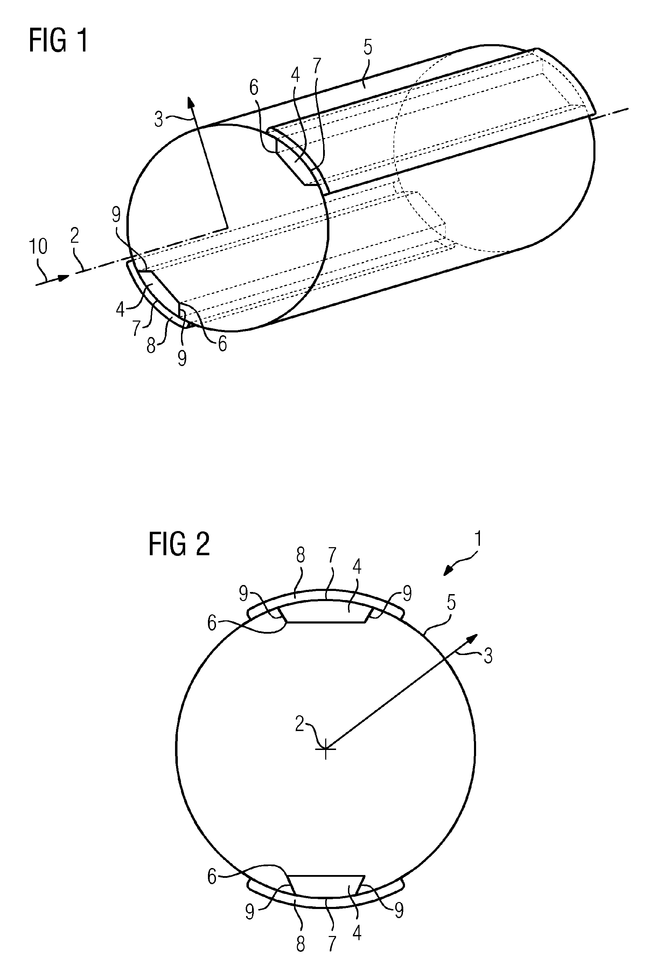

Figur 1 zeigt eine Komponente 1, die beispielsweise als eine Turbinenwelle ausgebildet ist, die in einer Strömungsmaschine verwendet werden kann. Als Strömungsmaschine ist beispielsweise eine Dampfturbine oder eine Gasturbine zu verstehen. Diese Komponente 1 ist rotationssymmetrisch um eine Rotationsachse 2 ausgebildet und rotiert im Betrieb um diese Rotationsachse mit vergleichsweise hohen Frequenzen wie beispielsweise 50Hz oder 60Hz. Solch hohe Rotationsfrequenzen führen in einer radialen Richtung 3 zu hohen Zentrifugalkräften. In der Regel ist die Massenverteilung in der Komponente 1 nicht zwingend symmetrisch zur Rotationsachse 2. Im Betrieb könnten daher Schwingungen auftreten, denen durch die Berücksichtigung von Wuchtelementen 4 begegnet wird. Die Wuchtelemente 4 werden auf der Komponenten-Oberfläche 5 angeordnet. Die Befestigung der Wuchtelemente 4 kann mit den üblichen Mitteln erfolgen. Beispielsweise könnte das Wuchtelement 4 mittels einer Schweißung mit der Komponente 1 verbunden werden.

Das Wuchtelement 4 kann zudem in eine Aussparung 6 angeordnet werden. Die Geometrie der Aussparung 6 und der Komponente 1 ist dabei derart, dass eine Wuchtelement-Oberfläche 7 bündig mit der Komponenten-Oberfläche 5 abschließt.

Auf die Wuchtelement-Oberfläche 7 ist eine Schutzschicht 8 angeordnet. Diese Schutzschicht 8 ist dabei derart ausgebildet, dass diese über die Ränder 9 der Wuchtelemente 4 ragt. Dadurch ist die Schutzschicht 8 derart ausgebildet, dass, sofern ein oxidierend wirkendes Medium um die Komponente 1 wäre, kein Kontakt zwischen Sauerstoffmoleküle und des Wuchtelements 4 möglich ist. Dadurch wird eine Oxidation des Wuchtelements 4 vermieden.

In einer alternativen Ausführung wird das Wuchtelement 4 bevor es in die Komponente 1 eingebaut wird mit der Schutzschicht 8 beschichtet. Zweckmäßig wird hierbei das Wuchtelement 4 komplett mit der Schutzschicht 8 beschichtet bevor es in eine Nut 11 eingebaut wird.

Die Figur 2 zeigt eine Querschnittsansicht der Komponente 1. Oberhalb der Rotationsachse 2 ist das Wuchtelement 4 derart angeordnet, dass die Ränder 9 so ausgebildet sind, dass das Wuchtelement 4 in radialer Richtung 3 aus der Aussparung 6 entnommen werden kann. Die Figur 2 zeigt zwei verschiedene Ausführungsformen einer Geometrie des Wuchtelements 4. Das Wuchtelement 4 in der unteren Ausführungsform ist derart, dass eine Entnahme in radialer Richtung 3 nicht möglich ist. Die Ränder 9 sind hierbei schwalbenschwanzförmig ausgebildet. Das Wuchtelement 4 müsste hierbei in einer axialen Richtung 10 in die Aussparung 6 eingeschoben werden.

Die Wuchtelemente 4 werden dabei derart auf der Komponenten-Oberfläche 5 verteilt, dass Schwingungen während des Betriebs reduziert sind. Das bedeutet, dass die Wuchtelemente 4 an geeigneten Stellen auf der Komponenten-Oberfläche 5 angeordnet werden. Die in Figur 1 und Figur 2 dargestellte symmetrische Anordnung der Wuchtelemente 4 ist lediglich als Beispiel zu verstehen. Es können, sofern erforderlich und es die Masseverteilung der Komponente 1 erfordert, mehrere Wuchtelemente 4 auf der Komponenten-Oberfläche 5 verteilt werden.

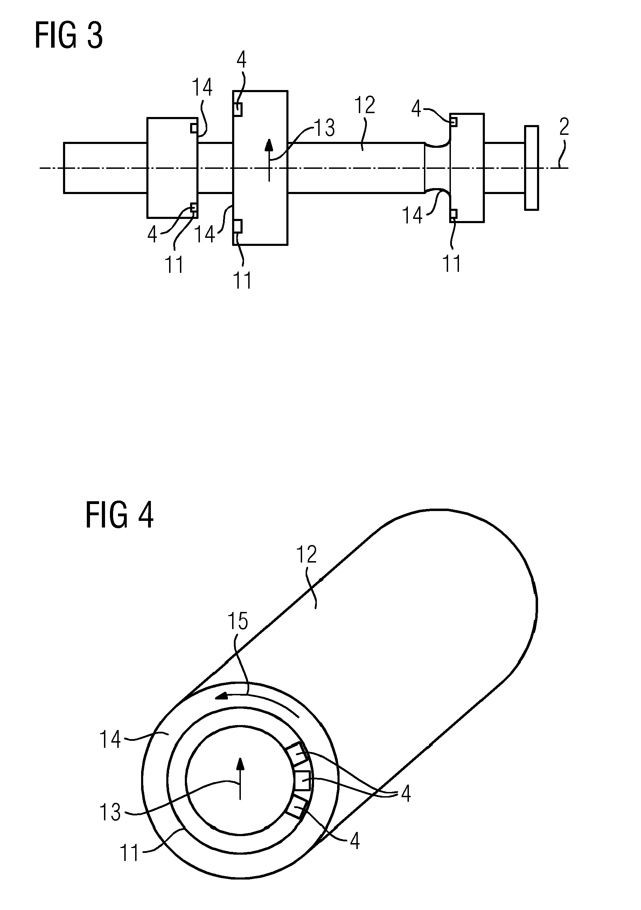

Die Figur 3 zeigt eine Querschnittsansicht eines Rotors 12 in einer alternativen Ausführungsform. Der Rotor 12 ist um die Rotationsachse 2 drehbar ausgebildet und weist in radialer Richtung 13 ausgebildete Stirnflächen 14 auf. In diese Stirnflächen 14 sind die Nuten 11 angeordnet, die derart ausgebildet sind, dass die Wuchtelemente 4 in diese Nuten 11 kraftschlüssig und/oder formschlüssig angeordnet werden können. Die Massen der Wuchtelemente 4 können variieren, damit Schwingungen möglichst reduziert werden. Durch den Einbau der Wuchtelemente 4 in die Nuten 11 auf den Stirnflächen 14 wird verhindert, dass trotz Fliehkräfte während des Betriebs die Wuchtelemente 4 nicht von der Komponente 1 lösen.

Die Figur 4 zeigt einen Ausschnitt des Rotors 12 aus der Figur 3 in einer perspektivischen Ansicht. Die Figur 4 veranschaulicht, dass die Wuchtelemente 4 in die Stirnfläche 14 in die Nuten 11 in Umfangsrichtung 15 angeordnet sind.

Die Komponente 1 ist aus martensitischem Stahl, austenitischem Stahl, ferritischem Stahl oder Nickelbasis-Legierung ausgebildet.

Das Wuchtelement 4 ist aus einer hochwolframhaltigen Legierung ausgebildet, wobei der Wolframgehalt zwischen 85 Gew.-% und 99 Gew.-% liegt.

Die Schutzschicht 8 kann durch verschiedene Verfahren aufgebracht werden. Als erste Möglichkeit bietet sich eine galvanische Beschichtung an. Solch eine galvanische Beschichtung erfolgt elektrochemisch. Als Materialien für die galvanische Beschichtung können folgende Materialien verwendet werden:
- Nickel oder
- Nickel-Chrom oder
- Nickel und Chrom.

Nickel und Chrom können hierbei als Mehrlagen-System verwendet werden und werden nach dem Aufbringen mittels der galvanischen Beschichtung einer anschließenden Diffusionsglühung ausgesetzt.

Ein zweites mögliches Beschichtungsverfahren ist das sogenannte PVD-Verfahren (Physical Vapor Deposition, Physikalische Gasphasenabscheidung). Für dieses vorgenannte Beschichtungsverfahren können folgende Materialien verwendet werden:
- Korund (Al₂O₃),
- Aluminiumnitrid (AlN),
- Chromnitrid (CrN),
- Chromaluminiumnitrid,
- Titannitrid (TiN),
- Titanaluminiumnitrid (TiAlN),
- Chrom oder
- Chrom-Gold.

Hierbei können Chromnitrid, Chromaluminiumnitrid, Titannitrid oder Titanaluminiumnitrid in einem Multilagen-System aufgebracht werden. Das bedeutet, dass verschiedene Lagen der vorgenannten Materialien übereinander angeordnet sind.

Ein drittes mögliches Beschichtungsverfahren erfolgt durch eine Einbettung des Wuchtelements 4 in die Komponente 1 und einem anschließenden Umgießen des Wuchtelements 4 mit einem geeigneten Material. Ein geeignetes Material ist beispielsweise eine Nickelbasis-Legierung.

## Patentansprüche

1. Komponente (1) zum Einsatz in einer Strömungsmaschine,
wobei die Komponente (1) eine Komponenten-Oberfläche (5) aufweist,
wobei die Komponente (1) ein Wuchtelement (4) umfasst,
wobei eine Schutzschicht (8) auf dem Wuchtelement (4) angeordnet ist.

2. Komponente (1) nach Anspruch 1,
wobei die Komponente (1) eine Komponenten-Oberfläche (5) aufweist,
wobei das Wuchtelement (4) auf der Komponenten-Oberfläche (5) angeordnet ist.

3. Komponente (1) nach Anspruch 1,
wobei die Komponente (1) eine Aussparung (6) aufweist, in der das Wuchtelement (4) angeordnet ist.

4. Komponente (1) nach Anspruch 3,
wobei das Wuchtelement (4) und die Komponenten-Oberfläche (5) bündig miteinander abschließen.

5. Komponente (1) nach einem der vorhergehenden Ansprüche,
wobei die Komponente (1) als Welle ausgebildet ist.

6. Komponente (1) nach Anspruch 5,
wobei das Wuchtelement (4) zum Wuchten derart auf der Komponenten-Oberfläche (5) angeordnet ist, dass während eines Betriebs Schwingungen vermieden sind.

7. Komponente (1) nach einem der vorhergehenden Ansprüche,
wobei die Komponente (1) aus einem martensitischen Stahl, einem austenitischen Stahl, einem ferritischen Stahl oder einer Nickelbasis-Legierung besteht.

8. Komponente (1) nach einem der vorhergehenden Ansprüche,
wobei das Wuchtelement (4) aus einer hochwolframhaltigen Legierung besteht, wobei der Wolframgehalt zwischen 85 Gew.-% und 99 Gew.-% liegt.

9. Komponente (1) nach einem der vorhergehenden Ansprüche,
wobei die Schutzschicht (8) aus folgenden Materialien ausgebildet ist:
- Nickel oder
- Nickel-Chrom oder
- Korund (Al₂O₃) oder
- Aluminiumnitrid (AlN) oder
- Chromnitrid (CrN) oder
- Chromaluminiumnitrid oder
- Titannitrid (TiN) oder
- Titanaluminiumnitrid (TiAlN) oder
- Chrom oder
- Chrom-Gold oder
- Nickelbasis-Legierungen.

10. Verfahren zur Herstellung einer Komponente (1),
wobei in die Komponenten-Oberfläche (5) ein Wuchtelement (4) angeordnet wird,
wobei das Wuchtelement (4) beschichtet wird.

11. Verfahren nach Anspruch 10,
wobei die Beschichtung mittels einer galvanischen Beschichtung erfolgt.

12. Verfahren nach Anspruch 11,
wobei folgende Materialien verwendet werden:
- Nickel oder
- Nickel-Chrom oder
- Nickel und Chrom als ein Mehrlagen-System mit anschließender Diffusionsglühung.

13. Verfahren nach Anspruch 10,
wobei die Beschichtung mittels PVD erfolgt.

14. Verfahren nach Anspruch 13,
wobei folgende Materialien verwendet werden:
- Korund (Al₂O₃) oder
- Aluminiumnitrid (AlN) oder
- Chromnitrid (CrN) oder
- Chromaluminiumnitrid oder
- Titannitrid (TiN) oder
- Titanaluminiumnitrid (TiAlN) oder
- Chrom oder
- Chrom-Gold oder
- Nickelbasis-Legierungen.

15. Verfahren nach Anspruch 10,
wobei die Beschichtung durch eine Einbettung und einem Umgießen des Wuchtsteins (4) erfolgt.

16. Verfahren nach Anspruch 15,
wobei folgende Materialien verwendet werden:
- Nickelbasis-Legierung.
